# FASCICULE DE BREVET EUROPEEN

(11) **EP 0 485 488 B1**
(45) Date de publication et mention de la délivrance du brevet: **16.02.1994**
(21) Numéro de dépôt: 90912494.3
(22) Date de dépôt: 27.07.1990
(51) Int. Cl.: G01V 11/00

(54) **SONDE D'IMAGERIE CHAMP TOTAL**
TOTALFELDABBILDUNGSSONDE
TOTAL-FIELD IMAGING PROBE

(30) Priorité: 01.08.1989 FR 8910582
(43) Date de publication de la demande: 20.05.1992
(73) Titulaire: FIS FULL IMAGING SYSTEM, F-13400 Aubagne (FR)
(72) Inventeur: Clot, André, F-13109 Simiane (FR)
(74) Mandataire: Moretti, René
(86) Numéro de dépôt international: FR9000574
(87) Numéro de publication internationale: WO9102269

(56) Documents cités:
- FR-A- 2 448 621
- US-A- 2 930 969
- US-A- 4 236 113

## Description

La présente invention a pour objet une sonde d'imagerie champ total permettant de réaliser des diagraphies sur toute la périphérie de la paroi d'un trou foré dans le sous-sol.

Le secteur technique de l'invention est la fabrication et l'exploitation sur chantier d'outils ou de sondes pour effectuer des mesures des caractéristiques du sol dans un trou foré traversant des formations géologiques et pour relever et analyser à distance ces mesures.

Une des applications principales de l'invention est son utilisation pour effectuer des diagraphies d'imagerie de puits permettant d'obtenir une bonne couverture de la totalité de la paroi de forage, en utilisant différents moyens de mesure individuels usuels, tels que les mesures acoustiques ou microrésistives.

On connaît en effet, différents systèmes et procédés dont certains ont fait l'objet de demandes de brevets et qui portent sur le même objet et/ou la même application que la présente invention, mais dont les solutions techniques retenues ne permettent pas de bonnes performances et/ou sont difficiles à mettre en oeuvre.

Dans la suite de la description et à titre de définition, le terme générique "carottage électrique" ou "diagraphie électrique" ou encore "log" désigne l'enregistrement en continu de paramètres physiques des formations rencontrées en cours de forage, en fonction de la profondeur.

On rappelle tout d'abord que la diagraphie d'imagerie est un nouveau concept permettant, à partir de mesures individuelles usuelles, de présenter selon un développé de la paroi du puits en fonction de la profondeur, la réponse de cette paroi à une mesure physique, cette mesure ayant une définition verticale et horizontale de l'ordre de plusieurs dizaines de centimètres pour les diagraphies courantes.

Cette représentation, sur tout support visuel affichable et par ailleurs orientée dans l'espace, constitue donc une image artificielle des formations rencontrées.

Sa mise en oeuvre nécessite pour l'essentiel :
- une investigation à l'aide du paramètre mesuré, permettant la couverture maximale de la paroi du puits ;
- des moyens de repérage dans l'espace;
- un traitement de chaque mesure représentant l'amplitude de ce paramètre sous forme d'une couleur ou d'un dégradé de gris; par exemple les fortes résistivités en blanc et les très faibles en noir. L'amplitude d'une onde sonore, émise par un capteur, après réflexion par la paroi du puits, peut être traitée de la même façon.

Ainsi, le brevet FR. 2.532.059 déposé le 19.08.1982 par la société SCHLUMBERGER PROSPECTION ELECTRIQUE, décrit un dispositif pour la présentation visuelle de résultats de mesure, pouvant s'appliquer à ce type de traitement.

Il est évident que pour être représentatives des formations rencontrées, ces mesures doivent investiguer un pourcentage maximal de la paroi du puits.

Pour cela, une possibilité est de réaliser une imagerie acoustique à partir d'un capteur tournant servant d'émetteur et de récepteur, et ne posant pas mécaniquement de problème. La densité des informations reçue ne dépend que de paramètres contrôlables :
- vitesse de rotation;
- vitesse ascensionnelle;
- nombre de scrutations par tour.

Il en est ainsi de toute autre mesure réalisée à partir d'un capteur tournant, tel que par exemple celui décrit dans la demande de brevet FR. 2.448.621 déposée le 09.02.1979 par l'INSTITUT FRANçAIS DU PETROLE et intitulée : "Sonde à patin rotatif pour effectuer des mesures dans un forage".

Par contre, toute mesure nécessitant la mise en contact de capteurs ou de patins sur la paroi d'un puits pose des problèmes mécaniques rappelés ci-après.

Pour réaliser en effet ce contact, les sondes utilisent habituellement des patins rigides ou semi-rigides constituant un côté d'un parallélogramme, le côté opposé étant défini à ses extrémités par une ou deux articulations situées sur le corps de sonde, tel que décrit pour une imagerie acoustique dans la demande de brevet U.S. 948.206 déposée le 31 Décembre 1986 par la société SHELL INTERNATIONALE RESEARCH.

La couverture de la mesure dépend de la taille des patins, de leur nombre et du diamètre du forage. Par ailleurs, la descente d'outil dans le puits, avant la mesure, impose qu'en position repos, patins repliés, ceux-ci soient contenus à l'intérieur du diamètre du corps de sonde et dans l'utilisation acoustique ci-dessus, le frottement des patins sur la paroi génère beaucoup de bruits parasites.

Dans le cadre d'une application courante, la couverture d'une sonde de diamètre extérieur 4''1/2, par exemple dans un trou en 8''1/2 (standards pétroliers équivalant respectivement à 114,3 mm et 216 mm) ne dépasse pas 40%; elle n'est plus que de 28% dans un puits en 12"1/4 (311 mm).

Cette contrainte oblige les opérateurs à réaliser plusieurs enregistrements afin que l'outil, ayant si possible tourné entre deux mesures, obtienne une couverture de la paroi suffisante.

Dans le domaine de l'imagerie pour sondes à électrodes de microrésistivité, on relève la demande de brevet 2.611.919 déposée le 05.03.1987 par la société de PROSPECTION ELECTRIQUE SCHLUMBERGER, concernant une sonde de diagraphie à large champ angulaire : cette sonde permet de doubler la couverture de la sonde usuelle mécanique en permettant l'implantation, à l'extrémité de chaque bras articulé, de deux volets latéraux de mesure disposés de part et d'autre d'un axe parallèle à l'axe de la sonde et décalés en hauteur, pour pouvoir les positionner sur le corps de sonde.

Cette implantation permet théoriquement d'obtenir 100% de couverture dans un puits en 7" (non standard en trou ouvert) et seulement 82% en 8"1/2 avec une sonde de 5" de diamètre extérieur. Cela conduit par ailleurs à une mécanique complexe et, en conséquence, onéreuse.

Une autre possibilité pour réaliser une imagerie à champ total en limitant les problèmes mécaniques, est d'effectuer celle-ci à partir de sonde ne touchant pas la paroi du trou à explorer cependant les mesures recueillies sont perturbées automatiquement par le fluide, qui est souvent de la boue, remplissant ce trou, et s'intercalant entre les capteurs et la paroi; les résultats sont alors difficilement interprétables car, que ce soit dans le domaine électrique ou acoustique, les fluides utilisés peuvent constituer un élément parasite : en acoustique, les microparticules solides présentes dans la boue diffractent l'onde sonore et diminuent fortement l'amplitude de l'onde reçue par le capteur; en électrique. la faible résistivité de la boue favorise un court-circuit partiel des lignes de courant à la sortie des électrodes..

Certes, on relève diverses études qui ont fait l'objet de dépôts de brevets pour limiter ces problèmes liés à l'influence du fluide, tant en électrique qu'en acoustique, tel que :
- la demande de brevet FR. 2.611.920 déposée le 25.02.1987 par le CNRS, qui utilise des électrodes électriques de détection de fractures situées en couronne au centre de la sonde et associées à des électrodes de focalisation et de recueil aux extrémités avec des moyens de correction propres à agir sur le potentiel des électrodes d'émission pour compenser la diffusion du courant dans le milieu fluide; en variante, les électrodes de protection et d'émission ont un mouvement de rotation autour d'un axe vertical de la sonde.
- La demande de brevet U.S. 935.422 déposée le 26.11.1986 par la société SHELL INTERNATIONALE RESEARCH, qui décrit un appareil de production d'images de trous de sonde, à transducteur acoustique, et comprenant des moyens d'amplification à gains variables réglables pour réduire les effets de faux signaux générés par la boue située en anneau autour de la sonde.

Outre les problèmes donc d'influence parasite du fluide intercalé qui, malgré les projets ci-dessus ne sont pas résolus pour obtenir une bonne interprétation des mesures, il faut souligner également la difficulté de positionner les sondes et de contrôler leur orientation puisqu'il n'y a pas d'appui contre les parois, cela rend donc encore plus difficile leur mise en oeuvre pour avoir un relevé le plus complet possible de la paroi.

Une dernière possibilité pour, d'une part, diminuer l'influence du fluide des systèmes ci-dessus et, d'autre part, simplifier les moyens mécaniques des précédents, est d'utiliser des sondes à paroi souple, qui peuvent alors se plaquer contre la paroi; cette possibilité a été développée dans diverses applications, toutes à électrodes dont on peut citer les deux exemples suivants, qui ont fait l'objet de dépôt de brevets : le brevet U.S. 2.930.969, déposé le 16 Mai 1956 par Monsieur BAKER, décrit une enveloppe souple ouverte vers le haut et le bas, comme une ancre flottante, et portant des électrodes sur sa surface externe, de telle façon qu'accrochée à une tige de manutention, elle se referme quand on la descend dans le puits et elle s'ouvre par la vitesse du fluide, pénétrant à sa partie supérieure quand on la remonte.

Un autre brevet U.S. 4.236.113 déposé le 13 Avril 1978 par Monsieur WILEY pour PHILIPS PETROLEUM, décrit une sonde comportant un corps gonflable, sur lequel sont disposées des électrodes dans un plan horizontal et qui vient en contact avec la paroi lorsque la sonde est positionnée à l'endroit voulu.

Ces systèmes permettent effectivement de réduire la complexité mécanique des patins articulés, mais ne résoluent pas le manque de couverture totale de la paroi du puits : de plus, le premier système exige une vitesse de remontée de sonde importante, et le deuxième au contraire, une prise de mesure à l'arrêt, car il obture alors totalement ledit puits.

Ainsi, aucun de ces procédés ou dispositifs ne permet de solutionner le problème auquel la présente invention apporte pourtant des solutions : en effet, le problème posé est de pouvoir réaliser une sonde permettant une imagerie champ total du sous-sol entourant un trou, qui améliore les performances des outils actuels, d'une part dans la couverture effectivement totale de la périphérie de la paroi jusqu'à des diamètres au moins de 216 mm et même au delà, avec une définition de mesure verticale et horizontale de l'ordre du centimètre, sur toute la surface de la paroi, d'autre part, dans l'élimination maximum des effets parasites du milieu fluide existant dans le trou et enfin en permettant sa remontée en cours de mesure en limitant les vibrations éventuelles dues aux frottements et malgré la présence du milieu fluide ambiant, qui doit donc circuler de part et d'autre de la sonde.

Une solution au problème posé est une sonde d'imagerie champ total permettant d'effectuer des diagraphies d'imagerie sur toute la périphérie de la paroi d'un trou foré dans le sous-sol et remplie d'un fluide, grâce à des capteurs de mesure des caractéristiques de ce sol, montés sur ou dans le corps de ladite sonde, certaines parties de ce corps pouvant venir en contact avec ladite paroi et en position repos, sa forme extérieure étant celle d'un cylindre d'un diamètre inférieur au diamètre dudit trou : selon l'invention ledit corps de la sonde comporte au moins une enveloppe moulée à partir d'un matériau de type élastomère, comprenant des éléments en hélices, séparés par des soufflets, de telle sorte que grâce à tout moyen interne d'expansion, ladite enveloppe se déploie pour que lesdits éléments épousent la paroi du puits et que lesdits soufflets assurent les liaisons entre ces éléments et maintiennent l'ensemble de l'enveloppe d'une manière semi-rigide et suivant une continuité de sa face périphérique.

Dans différents modes de réalisation, ladite enveloppe peut être complètement fermée et contient un fluide pouvant être mis sous pression, pour constituer ledit moyen interne d'expansion de l'enveloppe contre la paroi du puits, lesdits éléments en hélices étant dotés de systèmes élastiques propres de rappel pour revenir en position repos en l'absence de pression relative du fluide supérieure à celle du fluide ambiant et lesdits soufflets laissent un passage suffisant audit fluide lors de la remontée de la sonde en cours de mesure; ou ledit moyen interne d'expansion est constitué de tout système hydromécanique reliant chaque élément en hélice à un élément statique de structure du corps de sonde.

Dans une application de mesure acoustique, au moins un des capteurs est un transducteur ultrasonique, situé à l'intérieur de ladite sonde, ladite enveloppe étant complètement fermée et remplie d'un fluide autorisant un bon couplage acoustique.

Dans une autre application de mesure électrique, éventuellement combinée avec la précédente, au moins certains desdits capteurs sont des électrodes connues de mesures microrésistives intégrées et moulées dans lesdits éléments en hélices pouvant venir en contact de ladite paroi du puits, et disposées le long de ces éléments afin que, quel que soit le diamètre de la position d'expansion et de mesure compatible avec ladite sonde, l'ensemble de la périphérie de la paroi dudit puits est entièrement couverte et investiguée par lesdites électrodes, lorsque l'on remonte sans rotation ladite sonde.

Différentes autres applications de mesures sont également possibles.

Le résultat est une nouvelle sonde d'imagerie champ total qui améliore considérablement les performances des outils actuels et ouvre la possibilité à de nombreuses utilisations. En effet, grâce à la combinaison d'éléments en hélices pouvant venir en contact avec la paroi du trou ou du puits, et de soufflets intercalés entre ces éléments, l'ensemble constituant un corps semi-rigide qui peut donc bien supporter les effets de frottement contre la paroi, il est possible d'adapter tous types de capteurs connus et utilisables pour les diagraphies : ces solutions techniques proposées sont d'autant plus intéressantes quand ces capteurs nécessitent un bon contact avec la formation du sous-sol à investiguer.

Cette sonde selon l'invention, en effet, résout en priorité le problème de recouvrement de la paroi du puits ou des mesures de microrésistivité ou toute mesure utilisant des capteurs en contact avec cette paroi. Cependant le principe de cette sonde permet également des applications et/ou améliorations pour d'autres méthodes de diagraphies d'imagerie, telles que celles décrites à titre d'exemple et plus en détail dans la description ci-après et concernant :
- l'imagerie acoustique car la sonde permet de s'affranchir de la contrainte due à la qualité de la boue et de diminuer fortement l'incidence des autres (contrastes des impédances acoustiques etc...);
- la combinaison avec l'imagerie électrique d'un système acoustique permettant également la mesure exacte de la géométrie du trou ;
- le problème de la camèra de puits en milieu opaque, tel que la boue de forage, qui interdit en général son utilisation en dehors des forages d'eau et de géothermie basse énergie.

Un autre avantage et non des moindres, quelle que soit l'application de cette sonde, est que celle-ci, étant donné son principe et les matériaux mis en oeuvre pour sa réalisation, est extrêment légère en regard des sondes usuelles.

En terme de mesure, ceci signifie :
- meilleure application des éléments et donc des segments de mesure quand ces éléments portent des capteurs;
- meilleur centrage de la sonde dans des puits déviés;
- diminution de l'effet de "YO-YO" de la sonde, qui est un déplacement non linéaire dû à un effort de friction variable et que l'on rencontre dans les systèmes comportant des patins.

On pourrait citer d'autres avantages de la présente invention, mais ceux cités ci-dessus en montrent déjà suffisamment pour en démontrer la nouveauté et l'intérêt.

La description, les dessins et les figures ci-après représentent un exemple de réalisation de l'invention, mais n'ont aucun caractère limitatif : d'autres réalisations sont possibles à partir des revendications qui précisent la portée et l'étendue de cette invention.

La figure 1 est une vue de profil d'un exemple de sonde suivant l'invention en position repos pénétrant dans un trou.

La figure 2 est une vue de profil de la sonde de la figure 1 en position de mesure.

La figure 3 est une vue en coupe AA de la figure 2 d'une sonde en position de mesure.

La figure 4 est une vue perspective d'un autre exemple de sonde.

La présente invention concerne la sonde elle-même, son principe de déploiement et de réalisation et aucunement l'électronique associée aux différentes mesures qui a déjà été développée pour ce type d'applications et qui n'est donc pas décrite.

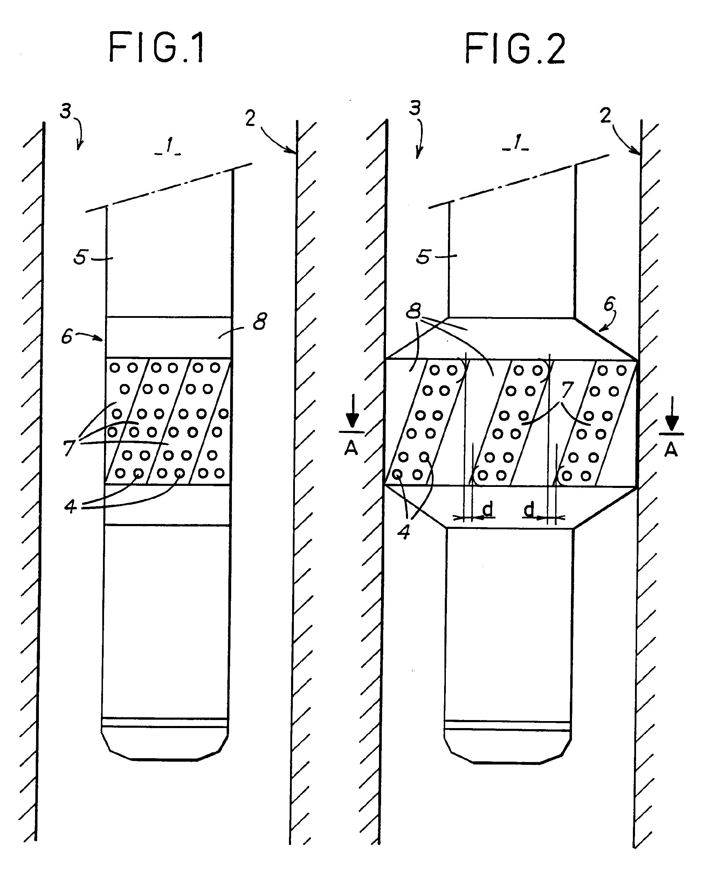

Dans sa position repos ou repliée, tel que représentée sur la figure 1, la sonde 5 peut être déplacée dans le trou foré 1, sa forme extérieure étant celle d'un diamètre inférieur à celui dudit trou 1. Celui-ci est en général rempli de fluide 3, qui dans le cas d'un forage en cours est de la boue opaque, et qui sépare donc la paroi 2 du trou du corps de sonde 5 : ce fluide doit pouvoir passer d'un côté à l'autre de la sonde lorsque celle-ci est déployée comme dans la figure 2 et déplacée linéairement pendant la mesure.

Ledit corps de sonde 5 comporte suivant l'invention une enveloppe 6, moulée à partir d'un matériau de type élastomère résistant bien à l'abrasion, aux huiles, à la chaleur etc... Cette enveloppe comprend des éléments 7 en hélices, qui lorsqu'ils sont en position repos, sont pratiquement adjacents les uns des autres : ces éléments 7 peuvent comporter pour les applications de mesure nécessitant un contact avec la paroi 2, des capteurs 4 tels qu'électrodes ou transducteurs, qui sont alors distribués hélicoïdalement sur ladite enveloppe 6.

En ce cas, on peut envisager de recouvrir les seules zones 7 en contact direct avec la paroi du puits lors du déploiement, en dehors des capteurs, d'une faible épaisseur de matière résistant particulièrement à l'abrasion, sans nuire à la souplesse nécessaire. L'ensemble des électrodes ou des transducteurs peut être moulé dans la matière du corps de sonde, selon des techniques bien connues et utilisées par ailleurs.

En variante, la matière des électrodes peut être en élastomère ou matériau similaire conducteur.

La figure 2 représente la même sonde 5 en position de mesure, grâce à une expansion et un déploiement de son enveloppe 6 contre ladite paroi 2 du puits ou trou 1.

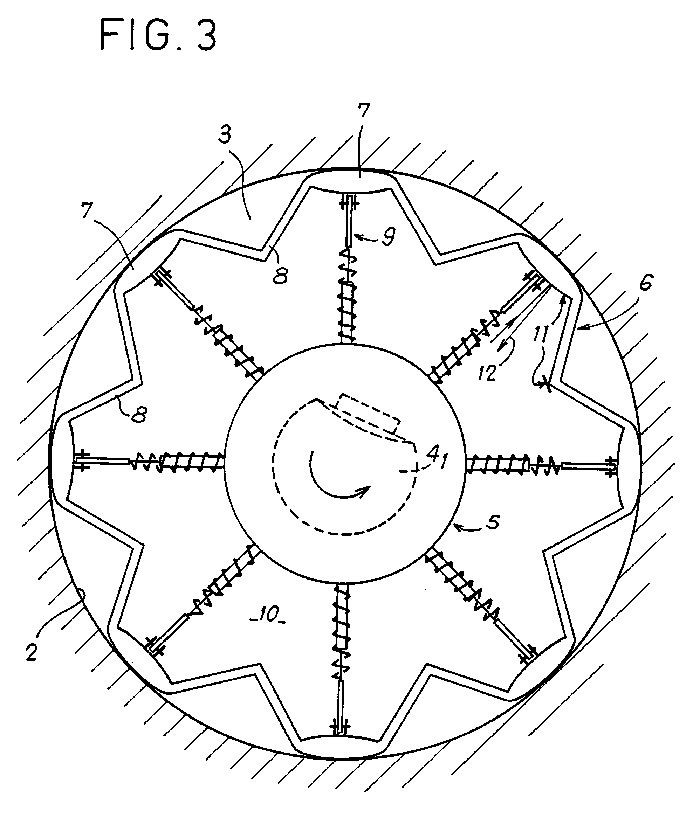

L'élasticité radiale, nécessaire au déploiement, est obtenue par l'intermédiaire de soufflets 8, pouvant être disposés conformément à la figure 3. Par ailleurs, quand l'enveloppe 6 est étanche et fermée, la section disponible entre ces soufflets 8 et la paroi du puits 2 permet le passage du fluide tel que la boue de forage 10, lors de la remontée de la sonde 5 en cours de mesure.

Quelle que soit l'expansion adaptée au diamètre du trou 2, celle-ci permet, jusqu'à un diamètre de la paroi maximum fixé et propre à chaque type de sonde, d'assurer un recouvrement "d" de mesures entre le capteur 4 situé en haut d'un élément 7 et celui situé en bas de l'élément adjacent, lors de la remontée de la sonde. Suivant la précision souhaitée et la définition de la mesure, on fixera une valeur de "d" minimum négative pour avoir un recouvrement de surface assuré pour les deux capteurs et minimum positive quand on accepte une tolérance de non recouvrement.

Les parties supérieures et inférieures des zones de mesure de l'enveloppe 6 peuvent être protégées pour éviter d'accrocher en descendant la sonde ou, en cours de mesure, en remontant. Cette protection peut être obtenue, par exemple par un système de "pétales" se chevauchant plus ou moins en fonction du diamètre.

Dans une réalisation préférée de l'invention, le déploiement se fait par mise en pression d'un fluide 10 à l'intérieur de l'enveloppe 6 étanche, qui doit être alors close, complètement fermée et étanche, contrôlé par un système mécanique 9 et de rappel pour revenir en position repos en l'absence de pression relative du fluide 10, assurant aux éléments hélicoïdaux 7 une géométrie connue en fonction du diamètre extérieur du cylindre sur lequel sont positionnés ces éléments et qui correspond, en position de mesure, à celui dudit trou 1, comme représenté sur la figure 3.

Dans une autre réalisation ledit moyen interne 9 d'expansion est constitué de tout système hydromécanique reliant chaque élément 7 en hélice à un élément statique de structure du corps de sonde 5 : ce système hydromécanique peut être constitué de vérins et de ressorts.

Selon un autre mode de réalisation, l'enveloppe 6 comporte une double paroi, dont l'espace ainsi délimité, peut être mis sous pression pour assurer une plus grande rigidité.

Ainsi ladite enveloppe 6 et son moyen interne d'expansion 9 peuvent être réalisés suivant une des formes décrites ci-dessus ou peuvent combiner plusieurs de ces formes, telles que :
- soit l'enveloppe 6 est fermée et étanche, et peut être déployée par un fluide sous pression;
- soit l'enveloppe 6 est fermée et étanche, et peut être déployée par un moyen mécanique 9 ou hydromécanique interne enfermé dans ladite enveloppe, qui peut être remplie alors d'un liquide 10 restant alors en équipression avec l'ambiance 3 extérieure;
- soit l'enveloppe 6 est ouverte vers le haut et le bas et des bras articulés 13 assurent son déploiement, ou tout autre moyen mécanique ou hydromécanique;
- soit l'enveloppe est comme dans le cas précédent et comporte en plus une double paroi pour la rendre plus rigide.

Les figures 1 et 2 illustrent des formes conformes aux deux premiers exemples ci-dessus cités. L'enveloppe 6 protège de la boue de forage l'ensemble du volume intérieur ainsi défini. Ceci implique que les ouvertures supérieure et inférieure de cette enveloppe fassent étanchéité sur les parties correspondantes du corps de la sonde 5.

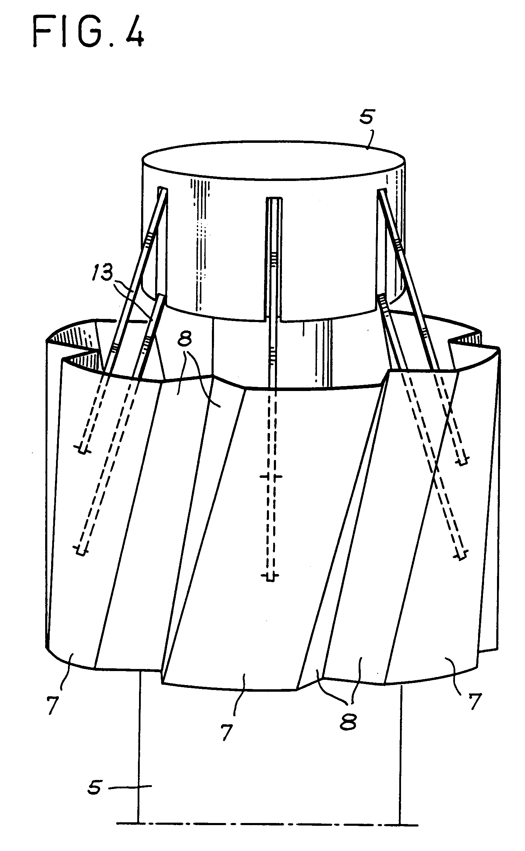

Cependant, les deux caractéristiques de base qui sont d'avoir un support d'une part, assurant une distribution hélicoïdale de segment pouvant porter des capteurs et d'autre part, possédant une capacité de déploiement radial, grâce à la présence de soufflets entre les zones de mesure, peuvent aussi être assurées sans nécessiter le recours à une enveloppe étanche fermée sur le corps de sonde : cette dernière possibilité est représentée sur la figure 4, en illustration des formes conformes aux deux derniers exemples ci-dessus cités.

On retrouve dans cette figure : les segments 7 avec des zones de mesure implantées hélicoïdalement et les soufflets 8.

Dans le cas représenté, des bras articulés 13 assurent le déploiement depuis le support ou corps de sonde 5; les électrodes et l'ensemble des connexions électriques nécessaires peuvent être moulées dans l'enveloppe 6 au niveau des zones de mesures.

En variante donc, l'enveloppe 6 peut être d'une double épaisseur et creuse, l'intérieur étant rempli d'un fluide hydraulique en équipression en position repos, et en légère surpression pendant les mesures avec le fluide ambiant, la géométrie d'ensemble du système restant identique.

Un des objectifs visés par cette dernière variante, est d'introduire une rigidité variable au niveau des zones de mesure et de pouvoir modifier le rayon de courbure de celles-ci en augmentant la pression à l'intérieur, de façon à s'adapter aux variations du diamètre de forage.

Dans cette variante, les soufflets 8 ne sont pas creux mais quelques passages tubulaires de faible diamètre implantés dans l'épaisseur des soufflets assurent la continuité hydraulique entre les différentes zones de mesures.

Les liaisons électriques entre l'électronique à l'intérieur de la sonde 5 et les électrodes passent derrière les bras de déploiement 13 et pénètrent dans la sonde par l'intermédiaire de connecteurs étanches.

Il en est de même des liaisons hydrauliques dans le cas de zones de mesures creuses 7.

La sonde comporte des moyens mécaniques 9 nécessaires à un repli régulier, tel que décrits ci-dessus; toute autre solution est possible telle que par exemple un système à ressort monté sur l'arète intérieure des soufflets 8. Cet ensemble de rappel entre les soufflets et la partie intérieure statique de la sonde 5, permet une position d'équilibre des soufflets entre cette tension de rappel et le différentiel de pression existant entre l'intérieur de la sonde et le puits, dans la version enveloppe fermée et fluide intérieur sous pression.

Les éléments hélicoïdaux 7, qui peuvent donc être de mesure, peuvent être réalisés en un ou plusieurs segments en fonction du déploiement à obtenir, la seule contrainte étant de connaître à tout moment la géométrie de ces éléments de mesure en fonction du diamètre déployé.

Le calcul théorique de recouvrement tient compte d'un déplacement linéaire ascendant de la sonde 5, sans rotation de celle-ci dans le forage, ce qui est rarement le cas.

Les contraintes régissant ce problème de rotation ont deux origines :
- contrainte existant entre les deux couches de torons dans le câble assurant la liaison mécanique pour la manutention et la transmission des mesures vers la surface;
- contrainte due aux éléments en hélices eux-mêmes et tendant, en l'absence de force s'y opposant, à faire tourner la sonde selon leur pas propre.

Au cas où ce dernier effet serait prépondérant, des empreintes également en hélices ayant un pas dans une direction opposée à celle de l'hélice peuvent être moulées entre les zones de mesure pour s'opposer à cette action.

La détermination du diamètre peut être faite de plusieurs façons, selon le degré de précision souhaité :
- avec la technique bien connue utilisant un potentiomètre intérieur le long d'un diamètre, dont le curseur se déplace en fonction du déploiement donc du diamètre;
- en mesurant le temps de parcours d'une onde acoustique émise par un capteur 4₁, qui est alors un transducteur ultrasonique 4₁ situé à l'intérieur de ladite sonde 5, ladite enveloppe 6 étant complètement fermée et remplie d'un fluide 10 autorisant un bon couplage acoustique.

Au moins un ou des réflecteurs acoustiques sont placés de façon régulière quand ily en a plusieurs à l'intérieur des éléments 7 de la sonde et permettent, grâce audit capteur acoustique 4₁, alors tournant et rotatif, quand il y a plusieurs, et dont l'onde 12 est réfléchie par chacun de ces réflecteurs 11, de connaître parfaitement la géométrie du trou 1.

En effet, la vitesse du son dans le fluide à l'intérieur de la sonde étant parfaitement connue, ainsi que l'épaisseur de matière entre la paroi du puits et la surface interne du réflecteur, le rayon peut être déterminé en permanence.

Cette technique par rapport à l'utilisation de l'onde réfléchie par la paroi permet d'obtenir une amplitude beaucoup plus importante et, par ailleurs indépendante de la lithologie.

Dans une autre réalisation, lesdits réflecteurs 11 acoustiques sont situés à l'intersection de chaque demi-soufflet 8 et orientés de telle façon que, quel que soit le déploiement, les perpendiculaires aux plans de ces réflecteurs passent par le capteur acoustique 4₁, dont l'onde 12 réfléchie par chacun des réflecteurs permet toujours de connaître la géométrie du trou 1.

Comme il a été dit précédemment, la géométrie de la sonde étant connue en fonction du diamètre, la position des capteurs 4 tels que des électrodes ou des transducteurs par rapport à des références fixes de la sonde, est connue en permanence.

La position de la sonde dans l'espace est connue grâce à un module de navigation constitué par exemple d'un accéléromètre à trois axes et d'un magnétomètre à trois axes, ou d'un gyromètre à trois axes, dont les principes et l'utilisation sont parfaitement connus.

Dans l'imagerie acoustique réalisée dans la configuration décrite précédemment, mais par exemple sous ou en dehors des réflecteurs acoustiques afin de connaître et d'investiguer directement la paroi 2 du puits, le cheminement de l'onde acoustique est le suivant :
- passage dans le fluide 10 du corps de sonde 5;
- passage au travers de la gaine de l'enveloppe 6;
- passage dans le fluide de forage 3;
- réflexion sur la paroi 2;
- passage dans le fluide de forage 3;
- passage au travers de la gaine de l'enveloppe 6;
- passage dans le fluide du corps de sonde 10;
- détection par le capteur 4₁.

L'amplitude de l'onderéfléchie et détectée par le capteur peut être altérée par différents paramètres :
- contrastes entre les diverses impédances acoustiques des matériaux ou fluide traversés : fluide de la sonde/enveloppe, enveloppe/fluide de forage etc....;
- densité de la boue et particulièrement présence de microparticules solides qui contribuent de façon prépondérante à l'affaiblissement du signal acoustique;
- excentration de l'outil dans le trou.

L'utilisation d'une sonde similaire dans le principe de déploiement à celle décrite précédemment mais utilisant, comme fluide interne 10 et comme matériau des secteurs 7 hélicoïdaux, des constituants choisis notamment en raison de leur impédance acoustique appropriée, permet de s'affranchir de la contrainte due à la qualité de la boue et de diminuer fortement l'incidence des autres.

L'incidence de l'excentration de la sonde sur la mesure d'amplitude pouvant être calculée, la mesure de la position de la sonde conformément au principe expliqué précédemment, permet, après traitement en surface de la mesure par l'algorithme correspondant, de restituer l'amplitude corrigée.

Rien n'empêche alors, en dehors de la densité d'informations à remonter en surface, de coupler sur la même sonde différentes mesures d'imageries, par exemple acoustiques et microrésistives; ladite sonde est alors constituée d'au moins deux enveloppes 6 placées l'une au-dessus de l'autre et pouvant comporter des éléments 7 et des capteurs 4 de caractéristiques différentes de l'une à l'autre afin de pouvoir réaliser différents types de mesure. La géométrie générale de la sonde demeure inchangée, la partie supérieure étant réservée à un type de mesure, la partie inférieure à un autre et ainsi de suite s'il y en a plusieurs.

Enfin cette sonde peut inclure une caméra : en ce cas le matériau des éléments 7 est transparent, ladite enveloppe 6 étant complètement fermée et remplie d'un fluide permettant un bon couplage optique, un desdits capteurs 4 placé dans l'enveloppe comme par exemple le capteur 4, acoustique représenté surla figure 3 étant une caméra de puits pouvant permettre l'observation, même en présence de boue opaque.

La caméra "CCD" de puits, dont la technique est bien connue, peut être orientée radialement selon 360° de liberté, son axe de rotation étant déplaçable axialement pour pouvoir investiguer sur toute la hauteur de la fenêtre définie par celle des éléments transparents.

Ce type de mesure est, en général, réalisé de façon stationnaire et la sonde est repliée entre chaque station. Un nettoyage des parois à l'aide gratteurs appropriés avec le train de tiges, peut être réalisé avant les mesures.

## Revendications

1. Sonde d'imagerie champ total permettant d'effectuer des diagraphies d'imagerie sur toute la périphérie de la paroi (2) d'un trou foré (1) dans le sous-sol et rempli d'un fluide (3), grâce à des capteurs (4) de mesure des caractéristiques de ce sol, montés sur ou dans le corps de ladite sonde (5), certaines parties dudit corps pouvant venir en contact avec ladite paroi et, en position repos, sa forme extérieure étant celle d'un cylindre d'un diamètre inférieur au diamètre dudit trou (1), caractérisée en ce que ledit corps de la sonde (5) comporte au moins une enveloppe (6) moulée à partir d'un matériau de type élastomère, comprenant des éléments (7) en hélices, séparés par des soufflets (8), de telle sorte que grâce à tout moyen interne (9) d'expansion, ladite enveloppe (6) se déploie pour que lesdits éléments (7) épousent la paroi (2) du puits et que lesdits soufflets (8) assurent les liaisons entre les éléments (7) et maintiennent l'ensemble de l'enveloppe d'une manière semi-rigide et suivant une continuité de surface périphérique.

2. Sonde d'imagerie champ total suivant la revendication 1, caractérisée en ce que ladite enveloppe (6) est complètement fermée et contient un fluide (10) pouvant être mis sous pression, pour constituer ledit moyen interne d'expansion de l'enveloppe contre la paroi (2) du puits, lesdits éléments (7) en hélices étant dotés de systèmes élastiques propres de rappel pour revenir en position repos en l'absence de pression relative du fluide (10) supérieure à celle du fluide ambiant (3) et lesdits soufflets (8) laissent un passage suffisant audit fluide (3) lors de la remontée de la sonde en cours de mesure.

3. Sonde d'imagerie champ total suivant la revendication 1, caractérisée en ce que ledit moyen interne (9) d'expansion est constitué de tout système hydromécanique reliant chaque élément (7) en hélice à un élément statique de structure du corps de sonde (5).

4. Sonde d'imagerie champ total suivant la revendication 3, cartactérisée en ce que l'enveloppe (6) comporte une double paroi, dont l'espace ainsi délimité, peut être mis sous pression pour assurer une plus grande rigidité.

5. Sonde d'imagerie champ total suivant l'une quelconque des revendications 1 à 4, caractérisée en ce qu'au moins certains desdits capteurs (4) sont des électrodes connues de mesures microrésistives intégrées et moulées dans lesdits éléments (7) en hélices pouvant venir en contact de ladite paroi (2) du puits, et disposées le long de ces éléments afin que, quel que soit le diamètre de la position d'expansion et de mesure compatible avec ladite sonde, l'ensemble de la périphérie de la paroi (2) dudit puits est entièrement couverte et investiguée par lesdites électrodes (4), lorsque l'on remonte sans rotation ladite sonde.

6. Sonde d'imagerie champ total suivant l'une quelconque des revendications 1 à 5, caractérisée en ce qu'au moins un desdits capteurs (4) est un transducteur ultrasonique (41), situé à l'intérieur de ladite sonde (5), ladite enveloppe (6) étant complètement fermée et remplie d'un fluide (10) autorisant un bon couplage acoustique.

7. Sonde d'imagerie champ total suivant la revendication 6, caractérisée en ce que des réflecteurs (11) acoustiques sont placés de façon régulière à l'intérieur des éléments (7) de la sonde et permettent, grâce audit capteur acoustique (4₁) alors tournant et rotatif, dont l'onde (12) est réfléchie par chacun de ces réflecteurs (11), de connaître parfaitement la géométrie du trou (1).

8. Sonde selon la revendication 6, caractérisée en ce que des réflecteurs (11) acoustiques sont situés à l'intersection de chaque demi-soufflet (8) et orientés de telle façon que, quel que soit le déploiement, les perpendiculaires aux plans de ces réflecteurs passent par le capteur acoustique (41), dont l'onde (12) réfléchie par chacun des réflecteurs permet de connaître la géométrie du trou (1).

9. Sonde selon l'une quelconque des revendications 1 à 8, caractérisée en ce que le matériau des éléments (7) est transparent, ladite enveloppe (6) étant complètement fermée et remplie d'un fluide permettant un bon couplage optique, un desdits capteurs (4) étant une caméra de puits pouvant permettre l'observation, même en présence de boue opaque.

10. Sonde d'imagerie champ total selon l'une quelconque des revendications 1 à 9, caractérisée en ce qu'elle est constituée d'au moins deux enveloppes (6) placées l'une au-dessus de l'autre et pouvant comporter des éléments (7) et des capteurs (4) de caractéristiques différentes de l'une à l'autre afin de pouvoir réaliser différents types de mesure.

## Patentansprüche

1. Totalfeldabbildungssonde zur Durchführung von den gesamten Umfang der Wand (2) eines von einem Fluid (3) erfüllten unterirdischen Bohrlochs (1) darstellenden Diagraphien mit Hilfe von am oder im Sondenkörper (5) montierten Meßaufnehmern (4) zur Messung der Eigenschaften des Bodens, wobei bestimmte Teile des Körpers in Kontakt mit der Wand kommen können, und dessen äußere Form die eines Zylinders mit kleinerem Durchmesser als dem des Lochs (1) ist,
dadurch **gekennzeichnet**, daß
der Sondenkörper (5) wenigstens eine aus einem elastomerartigen Material geformte Hülle (6) aufweist, die schraubenlinienförmige Elemente (7) umfaßt, die durch Bälge (8) getrennt sind, derart, daß mit Hilfe einer beliebigen inneren Dehnungseinrichtung (9) die Hülle (6) sich dehnt, so daß die Elemente (7) sich an die Wand (2) des Lochs anschmiegen und die Bälge (8) die Verbindungen zwischen den Elementen (7) herstellen und die gesamte Hülle halbstarr entlang einer kontinuierlichen Umfangsfläche halten.

2. Totalfeldabbildungssonde nach Anspruch 1,
dadurch gekennzeichnet, daß
die Hülle (6) vollständig geschlossen ist und ein Fluid (10) enthält, das unter Druck gesetzt werden kann, um die innere Dehnungseinrichtung zum Anschmiegen der Hülle an die Wand (2) des Bohrlochs darzustellen, wobei die schraubenlinienförmigen Elemente (7) mit eigenen elastischen Rückholsystemen versehen sind, um in eine Ruheposition zurückzukehren, wenn der relative Druck des Fluids (10) nicht größer als der des umgebenden Fluids (3) ist, und daß die Bälge (8) einen ausreichenden Durchgang für das Fluid (3) beim Anheben der Sonde im Laufe der Messung lassen.

3. Totalfeldabbildungssonde nach Anspruch 1,
dadurch gekennzeichnet, daß
die innere Dehnungseinrichtung (9) aus einem beliebigen hydromechanischen System besteht, das jedes schraubenlinienförmige Element (7) mit einem statischen Strukturelement des Sondenkörpers (5) verbindet.

4. Totalfeldabbildungssonde nach Anspruch 3,
dadurch gekennzeichnet, daß
die Hülle (6) eine doppelte Wand aufweist, wobei der dadurch begrenzte Zwischenraum unter Druck gesetzt werden kann, um eine größere Steifigkeit herzustellen.

5. Totalfeldabbildungssonde nach einem der Ansprüche 1 bis 4, dadurch gekennzeichnet, daß
wenigstens bestimmte der Mesaufnehmer (4) bekannte Mikroresistivitätsmeßelektroden sind, die in die schraubenlinienförmigen Elemente (7) integriert und eingeformt sind, die in Kontakt mit der Wand (2) des Lochs kommen können, und die entlang dieser Elemente angeordnet sind, so daß unabhängig vom Durchmesser der mit der Sonde kompatiblen Dehnungs- und Meßposition der gesamte Umfang der Wand (2) des Lochs vollständig durch die Elektroden (4) abgedeckt und untersucht wird, wenn die Sonde ohne Drehung angehoben wird.

6. Totalfeldabbildungssonde nach einem der Ansprüche 1 bis 5, dadurch gekennzeichnet, daß
wenigstens einer der Meßaufnehmer (4) ein Ultraschalwandler (4₁) ist, der innerhalb der Sonde (5) angeordnet ist, und daß die Hülle (6) vollständig geschlossen und mit einem Fluid (10) gefüllt ist, das eine gute akustische Kopplung ermöglicht.

7. Totalfeldabbildungssonde nach Anspruch 6,
dadurch gekennzeichnet, daß
akustische Reflektoren (11) in regelmäßiger Weise innerhalb der Elemente (7) der Sonde angeordnet sind, und mit Hilfe des dabei rotierenden drehbeweglichen Meßaufnehmers (4₁), dessen Welle (12) von jedem der Reflektoren (11) reflektiert wird, es ermöglichen, die Geometrie des Lochs (1) genau zu ermitteln.

8. Sonde nach Anspruch 6,
dadurch gekennzeichnet, daß
die akustischen Reflektoren (11) an der Intersektion eines jeden Halbbalges (8) angeordnet und so orientiert sind, daß unabhängig von der Dehnung die Senkrechten zu den Ebenen dieser Reflektoren durch den akustischen Meßaufnehmer (4₁) verlaufen, dessen von jedem der Reflektoren reflektierte Welle (12) die Bestimmung der Geometrie des Lochs (1) ermöglicht.

9. Sonde nach einem der Ansprüche 1 bis 8,
dadurch gekennzeichnet, daß
das Material der Elemente (7) transparent ist, die Hülle (6) vollständig geschlossen und mit einem Fluid gefüllt ist, das eine gute optische Kopplung ermöglicht, und einer der Meßaufnehmer (4) eine Bohrlochkamera ist, die die Beobachtung auch in Anwesenheit von undurchsichtigem Schlamm ermöglichen kann.

10. Totalfeldabbildungssonde nach einem der Ansprüche 1 bis 9, dadurch gekennzeichnet, daß
sie aus wenigstens zwei übereinander angeordneten Hüllen (6) besteht, die Elemente (7) und Meßaufnehmer (4) mit voneinander unterschiedlichen Eigenschaften aufweisen können, um unterschiedliche Arten von Messungen durchführen zu können.

## Claims

1. Total field imaging probe for effecting imaging logs over the whole periphery of the wall (2) of a hole (1) bored in the sub-soil and filled with a fluid (3), thanks to sensors (4) for measuring the characteristics of this soil, mounted on or in the body of said probe (5), certain parts of said body being able to come into contact with said wall and, in rest position, its outer shape being that of a cylinder with a diameter smaller than the diameter of said hole (1), characterized in that said body of the probe (5) comprises at least one casing (6) moulded from a material of elastomer type, comprising helical elements (7), separated by bellows (8), so that, thanks to any internal expansion means (9), said casing (6) unfolds so that said elements (7) follow the shape of the wall (2) of the well and said bellows (8) ensure the connections between the elements (7) and maintain the assembly of the casing in semi-rigid manner and following a peripheral surface continuity.

2. Total field imaging probe according to Claim 1, characterized in that said casing (6) is completely closed and contains a fluid (10) which may be placed under pressure, in order to constitute said internal means for expanding the casing against the wall (2) of the well, said helical elements (7) being provided with appropriate elastic return systems for returning into rest position in the absence of relative pressure of the fluid (10) greater than that of the ambient fluid (3) and said bellows (8) leave a sufficient passage for said fluid (3) during the rise of the probe in the course of measurement.

3. Total field imaging probe according to Claim 1, characterized in that said internal expansion means (9) is constituted by any hydromechanical system connecting each helical element (7) to a static structure element of the probe body (5).

4. Total field imaging probe according to Claim 3, characterized in that the casing (6) comprises a double wall, of which the space thus defined may be placed under pressure to ensure a greater rigidity.

5. Total field imaging probe according to any one of Claims 1 to 4, characterized in that at least certain of said sensors (4) are known microresistive measurement electrodes integrated and moulded in said helical elements (7) which may come into contact with said wall (2) of the well, and disposed along these elements so that, whatever the diameter of the position of expansion and of measurement compatible with said probe, the whole of the periphery of the wall (2) of said well is entirely covered and investigated by said electrodes (4), when said probe is raised without rotation.

6. Total field imaging probe according to any one of Claims 1 to 5, characterized in that at least one of said sensors (4) is an ultrasonic transducer (4₁), located inside said probe (5), said casing (6) being completely closed and filled with a fluid (10) allowing a good acoustic coupling.

7. Total field imaging probe according to Claim 6, characterized in that acoustic reflectors (11) are placed in regular manner inside the elements (7) of the probe and make it possible, thanks to said acoustic sensor (4₁), in that case turning and rotative, of which the wave (12) is reflected by each of these reflectors (11), to know the geometry of the hole (1) perfectly.

8. Probe according to Claim 6, characterized in that acoustic reflectors (11) are located at the intersection of each half-bellows (8) and oriented so that, whatever the unfolding, the perpendiculars to the planes of these reflectors pass through the acoustic sensor (4₁) of which the wave (12) reflected by each of the reflectors enables the geometry of the hole (1) to be known.

9. Probe according to any one of Claims 1 to 8, characterized in that the material of the elements (7) is transparent, said casing (6) being completely closed and filled with a fluid allowing a good optical coupling, one of said sensors (4) being a well camera which may allow observation even in the presence of opaque mud.

10. Total field imaging probe according to any one of Claims 1 to 9, characterized in that it is constituted by at least two casings (6) placed one above the other and able to comprise elements (7) and sensors (4) of characteristics different from one another in order to be able to effect different types of measurement.
